# EUROPEAN PATENT APPLICATION

(11) **EP 4 800 467 A2**
(43) Date of publication of application: **02.09.2026**
(21) Application number: 26156286.2
(22) Date of filing: 04.02.2026
(51) Int. Cl.: G02F 1/1335

(54) **ELECTRONIC DEVICE**

(30) Priority: 27.02.2025 US 202563763919 P; 05.11.2025 CN 202511605121
(71) Applicant: InnoLux Corporation, Chu-Nan, Miao-Li 350 (TW)
(72) Inventor: HSIEH, Hong-Sheng, 350 Miao-Li County (TW); HSIEH, Chia-Hsien, 350 Miao-Li County (TW)
(74) Representative: Straus, Alexander

(57) **Abstract**

An electronic device (ED) includes a backlight module (BL), a light modulating panel (MP), a lens structure (LS) and a display panel (DP). The light modulating panel (MP) has pixels (PX). The light modulating panel (MP) includes a substrate (SB3) and a light modulating panel medium layer (MD2). The lens structure (LS) is disposed on the light modulating panel (MP) and includes lenses (LN), wherein at least one lens (LN) corresponds to at least two pixels (PX). The display panel (DP) is disposed on the lens structure (LS). One of the lenses (LN) has a protruding surface (SA), a first geometric optical distance L1 is included between the protruding surface (SA) and the light modulating panel medium layer (MD2), the one of the lenses (LN) has a focal length LF and a field of view at focal point FOV, wherein 0.5≤L1/LF≤0.8, and 45°≤FOV≤70°.

## Description

### Field of the Disclosure

The present disclosure relates to an electronic device, and more particularly to an electronic device capable of adjusting light type.

### Background of the Disclosure

Providing a display device capable of adjusting the light type at any position within the display region is still an important issue in the present field.

### Summary of the Disclosure

This is in mind, the present disclosure aims at providing an electronic device capable of adjusting light type.

This is achieved by an electronic device according to the claims. The dependent claims pertain to corresponding further developments and improvements.

As will be seen more clearly from the detailed description following below, an electronic device is provided by the present disclosure. The electronic device includes a self-emissive or non-self-emissive display, wherein at least one lens corresponds to at least two light emitting units or at least two pixels. The display panel is disposed on the lens structure. The lens has a protruding surface, a first geometric optical distance L1 is included between the protruding surface and the light emitting units or between the protruding surface and the light modulating panel medium layer, the lens has a focal length LF and a field of view at focal point FOV, wherein the first geometric optical distance L1, the focal length LF and the field of view at focal point FOV satisfy: 0.5≤L1/LF≤0.8, and 45°≤F0V≤70°.

### Brief Description of the Drawings

In the following, the disclosure is further illustrated by way of example, taking reference to the accompanying drawings. Thereof:
FIG. 1 schematically illustrates a cross-sectional view of an electronic device according to a first embodiment of the present disclosure;
FIG. 2 schematically illustrates a cross-sectional view of a lens of an electronic device according to the present disclosure;
FIG. 3 schematically illustrates a cross-sectional view of an electronic device according to a second embodiment of the present disclosure;
FIG. 4 schematically illustrates a cross-sectional view of an electronic device according to a third embodiment of the present disclosure;
FIG. 5 schematically illustrates a cross-sectional view of an electronic device according to a fourth embodiment of the present disclosure;
FIG. 6 schematically illustrates a cross-sectional view of an electronic device according to a fifth embodiment of the present disclosure;
FIG. 7 schematically illustrates a cross-sectional view of an electronic device according to a sixth embodiment of the present disclosure;
FIG. 8 schematically illustrates a cross-sectional view of an electronic device according to a seventh embodiment of the present disclosure; and
FIG. 9 schematically illustrates a partial top view of an electronic device according to an eighth embodiment of the present disclosure.

### Detailed Description

The present disclosure may be understood by reference to the following detailed description, taken in conjunction with the drawings as described below. Various drawings of this disclosure show only a portion of the device. In addition, the number and dimension of each element shown in drawings are only illustrative.

In the following description and in the claims, the terms "include", "comprise" and "have" are used in an open-ended fashion, and thus should be interpreted to mean "include, but not limited to...".

When an element or layer is referred to as being "disposed on" or "connected to" another element or layer, it can be directly on or directly connected to the other element or layer, or intervening elements or layers may be presented (indirectly).

Although terms such as first, second, third, etc., may be used to describe diverse constituent elements, such constituent elements are not limited by the terms. The terms are used only to discriminate a constituent element from other constituent elements in the specification. In the following description, a first constituent element may be a second constituent element in a claim.

The thickness, length and width may be measured through optical microscope, and the thickness or width may be measured through the cross-sectional view in the electron microscope.

Any two values or directions used for comparison may have certain errors. The terms "substantially" are generally interpreted as being within ± 10%, ± 5%, ± 3% or ± 0.5% of the given value.

In addition, the terms "the given range is from a first value to a second value" or "the given range is located between a first value and a second value" represents that the given range includes the first value, the second value and other values there between.

If a first direction is said to be perpendicular to a second direction, the included angle between the first direction and the second direction may be located between 80 to 100 degrees. If a first direction is said to be parallel to a second direction, the included angle between the first direction and the second direction may be located between 0 to 10 degrees.

Unless it is additionally defined, all terms (including technical and scientific terms) used herein have the same meaning as commonly understood by those ordinary skilled in the art. These terms should not be interpreted in an idealized or overly formal manner, unless it is specifically defined in the embodiments of the present disclosure.

The technical features in different embodiments described in the following can be replaced, recombined, or mixed with one another to constitute another embodiment without departing from the spirit of the present disclosure.

The electronic device of the present disclosure may include a display device, a light emitting device, a back-light device or other suitable electronic devices, but not limited thereto. The electronic device of the present disclosure may be a foldable electronic device. The display device may include a non-self-emissive display device or a self-emissive display device. The electronic device may include electronic units, wherein the electronic units may include light emitting diodes or photo diodes. The light emitting diode may for example include an organic light emitting diode (OLED) or an inorganic light emitting diode. The inorganic light emitting diode may for example include a mini light emitting diode (mini LED), a micro light emitting diode (micro LED) or a quantum dot light emitting diode (QLED), but not limited thereto. The display device is taken as an example of the electronic device to describe the present disclosure, but not limited thereto.

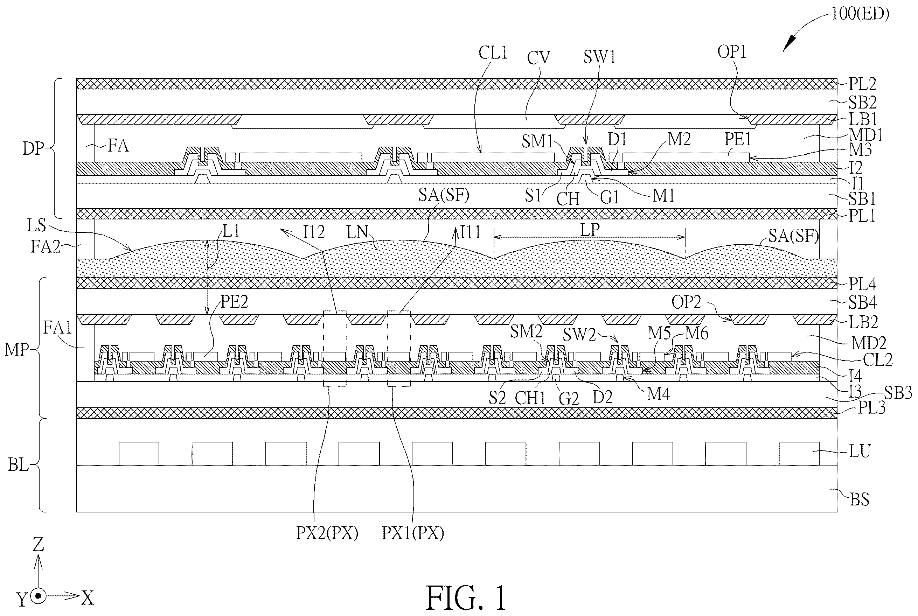

Referring to FIG. 1, FIG. 1 schematically illustrates a cross-sectional view of an electronic device according to a first embodiment of the present disclosure. The electronic device ED may include a display device 100, but not limited thereto. According to the present embodiment, the display device 100 may include a backlight module BL, a light modulating panel MP, a lens structure LS, and a display panel DP. The light modulating panel MP is disposed on the backlight module BL, the lens structure LS is disposed on the light modulating panel MP, and the display panel DP is disposed on the lens structure LS.

The backlight module BL includes a plurality of light emitting units LU. Specifically, the backlight module BL includes a base BS, and the light emitting units LU may be disposed on the base BS, but not limited thereto. The light emitting units LU may include light emitting diodes. The backlight module BL may serve as a light source of the display device 100 to provide light for display. The backlight module BL may further include other suitable elements, such as a diffusion plate, a bright enhancement film (BEF), and the like.

The display panel DP may include a non-self-emissive display panel, such as a liquid crystal display panel, but not limited thereto. For example, the display panel DP may include a liquid crystal display panel that is actively or passively driven. The display panel DP may include substrates SB1 and SB2, and a circuit layer CL1, a first medium layer MD1, and a light blocking layer LB1 disposed between the substrates SB1 and SB2, but not limited thereto. The first medium layer MD1 is a display panel medium layer. The substrates SB1 and SB2 may include rigid or flexible substrates, and the materials thereof may for example include glass, quartz, sapphire, ceramic, polyimide (PI), polycarbonate (PC), polyethylene terephthalate (PET), other suitable materials, or combinations thereof. The first medium layer MD1 may include a liquid crystal material. The circuit layer CL1 is disposed on the substrate SB1 and includes a structure formed by stacking at least one conductive layer and at least one insulating layer. For example, the circuit layer CL1 may include a conductive layer M1, a semiconductor layer SM1, a conductive layer M2, a conductive layer M3, an insulating layer I1 disposed between the conductive layer M1 and the semiconductor layer SM1, and an insulating layer I2 disposed between the conductive layers M2 and M3. The circuit layer CL1 includes a plurality of switching elements SW1, such as thin film transistors. For example, the switching element SW1 includes a gate G1, a channel layer CH, and a source S1 and a drain D1 that contact the channel layer CH. The gate G1 is formed of the conductive layer M1, the channel layer CH is formed of the semiconductor layer SM1, and the source S1 and the drain D1 are formed of the conductive layer M2. In this case, the insulating layer I1 may serve as a gate insulating layer. The circuit layer CL1 may further include a plurality of pixel electrodes PE1, which may be formed of the conductive layer M3. The pixel electrodes PE1 are electrically connected to the switching elements SW1 (or the drains D1). The circuit layer CL1 may further include other suitable elements or layers, such as scan lines, data lines, driving elements, common electrodes, and the like. The switching elements SW1 and/or the driving elements may transmit display signals to the pixel electrodes PE1 to control the arrangement of liquid crystal molecules in the first medium layer MD1. The light blocking layer LB1 is disposed on the substrate SB2 and includes a plurality of openings OP1. The light blocking layer LB1 may include a black matrix. At least one opening OP1 of the light blocking layer LB1 may correspond to one pixel (or sub-pixel) of the display panel DP, or to one pixel electrode PE1. In some embodiments, the region of one pixel (or sub-pixel) of the display panel DP may be the region enclosed by two adjacent scan lines and two adjacent data lines. In some embodiments, the region of one pixel (or sub-pixel) of the display panel may be defined as the region corresponding to one pixel electrode PE1. The display panel DP further includes a color conversion layer CV, which is disposed corresponding to the openings OP1 of the light blocking layer LB1. Specifically, the color conversion layer CV is disposed in the openings OP1 of the light blocking layer LB1. The color conversion layer CV may include color filters, quantum dots, other suitable materials, or combinations thereof. The display panel DP further includes polarizers PL1 and PL2. The polarizer PL1 is disposed on the side of the substrate SB1 away from the substrate SB2, and the polarizer PL2 is disposed on the side of the substrate SB2 away from the substrate SB1. The polarizing directions of the polarizers PL1 and PL2 may be determined based on the material of the first medium layer MD1. For example, in the present embodiment, the polarizing directions of the polarizers PL1 and PL2 may be perpendicular to each other. The display panel DP further includes a frame glue FA, which may be disposed around the outer edge of the display panel DP and surround the first medium layer MD1. It should be noted that the display panel DP may further include other suitable elements or layers, and is not limited to what is shown in FIG. 1.

The light modulating panel MP, except that it may not include the color conversion layer CV, is similar to the display panel DP and may refer to the structure of the display panel DP. For example, the light modulating panel MP may include a substrate SB3, a substrate SB4, and a circuit layer CL2, a second medium layer MD2, and a light blocking layer LB2 disposed between the substrates SB3 and SB4. The circuit layer CL2 may include a conductive layer M4, a semiconductor layer SM2, a conductive layer M5, a conductive layer M6, an insulating layer I3 disposed between the conductive layer M4 and the semiconductor layer SM2, and an insulating layer I4 disposed between the conductive layer M5 and the conductive layer M6. The circuit layer CL2 may include a plurality of switching elements SW2, each of which includes a gate G2, a channel layer CH1, and a source S2 and a drain D2 that are in contact with the channel layer CH1. The circuit layer CL2 further includes a plurality of pixel electrodes PE2. A second medium layer MD2 is disposed on the substrate SB3. The material of the second medium layer MD2 may be the same as the material of the above-mentioned first medium layer MD1, a self-emissive material, or an optical functional material, but not limited thereto. In some embodiments, the second medium layer MD2 may include light emitting elements, such as light emitting diodes. A light blocking layer LB2 may be disposed on the substrate SB4 and include a plurality of openings OP2. The light modulating panel MP further includes a polarizer PL3 and a polarizer PL4. The light modulating panel MP further includes a frame glue FA1 that surrounds the second medium layer MD2.

The light modulating panel MP may include a plurality of pixels PX (or sub-pixels). As shown in FIG. 1, one pixel PX may for example include a pixel electrode PE2 and portions of the second medium layer MD2 and the circuit layer CL2 corresponding to the pixel electrode PE2, and may correspond to one opening OP2. The switching elements SW2 and/or driving elements may be used to control the arrangement of liquid crystal molecules in the second medium layer MD2 within the pixel PX, thereby controlling the polarization direction of light after passing through the pixel PX. It should be noted that both the light modulating panel MP and the display panel DP may emit light to display images, but they serve different display purposes. The light modulating panel MP is used in conjunction with lenses to control light. Specifically, when the polarization direction of a light after passing through a pixel PX is the same as the polarization direction of the polarizer PL4, the light may be emitted from the light modulating panel MP; and when the polarization direction of a light after passing through a pixel PX is different (e.g., perpendicular) from the polarization direction of the polarizer PL4, the light may not be emitted from the light modulating panel MP.

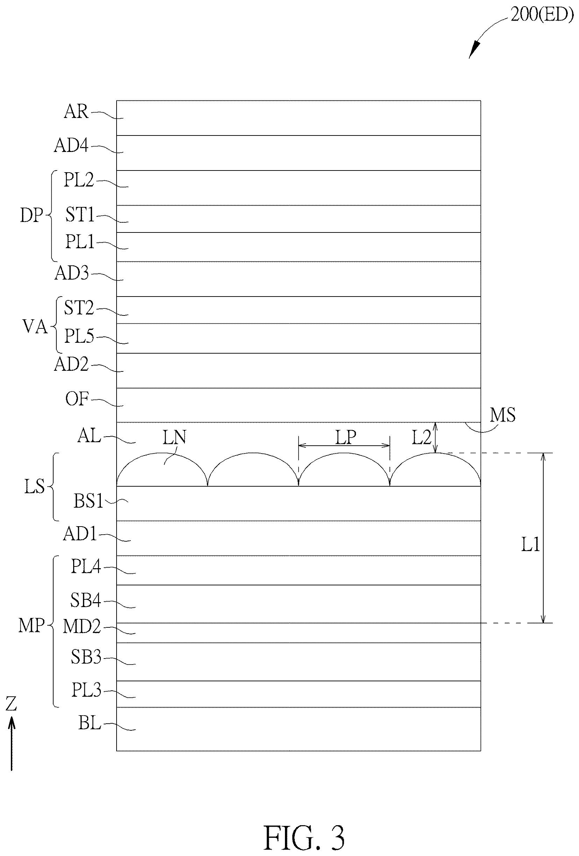

According to the present embodiment, the lens structure LS is disposed between the light modulating panel MP and the display panel DP. Referring to FIG. 3, the lens structure LS may include a base BS1 and a plurality of lenses LN disposed on the base BS1. The lenses LN may have a columnar structure and may be arranged in a direction perpendicular to the normal direction (i.e., the direction Z) of the display device 100. For example, in FIG. 1, the lenses LN may be arranged along the direction X, but not limited thereto. In some embodiments, the lenses LN may be arranged along the direction Y. In some embodiments, the lens structure LS may be directly disposed on the light modulating panel MP, as shown in FIG. 1. In some embodiments, the lens structure LS may be attached to the light modulating panel MP through an adhesive layer (e.g., the adhesive layer AD1 shown in FIG. 3). The lens structure LS may have a protruding surface SF. Specifically, in a cross-sectional view of the lens structure LS, the protruding surface SF may be an undulating surface formed by the protruding surfaces SA (i.e., arc-shaped surfaces) of the lenses LN. In this case, the portion between two adjacent relatively low points of the protruding surface SF may be defined as the protruding surface SA of one lens LN. The protruding surface SF of the lens structure LS may face the display panel DP, that is, the protruding surface SF is on the side of the lens structure LS away from the light modulating panel MP. According to the present embodiment, at least one lens LN of the lens structure LS may correspond to at least two pixels PX in the light modulating panel MP. That is, in the normal direction of the display device 100, at least one lens LN overlaps at least two pixels PX. For example, in FIG. 1, each lens LN may substantially correspond to three pixels PX, but not limited thereto. In this case, the pixels PX in the light modulating panel MP may correspond to different positions of the lens LN. Specifically, a pixel PX may correspond to the optical center (or center) or a non-central position of the lens LN. For example, as shown in FIG. 1, in the light modulating panel MP, the pixel PX1 may substantially correspond to the optical center of the lens LN, while the pixel PX2 may correspond to a non-central position of the lens LN. Therefore, the lights emitted from different pixels PX of the light modulating panel MP may have different traveling directions or different light types after passing through the lens structure LS. In detail, when a light I11 passes through a pixel PX (e.g., the pixel PX1) in the light modulating panel MP that corresponds to the optical center of the lens LN and is emitted from the light modulating panel MP, the traveling direction of the light I11 after passing through the lens structure LS (or the lens LN) may be substantially parallel to the normal direction of the display device 100, that is, the light I11 may be a normal light (i.e., a light substantially parallel to the direction Z). On the other hand, when a light I12 passes through a pixel PX (e.g., the pixel PX2) in the light modulating panel MP that corresponds to a non-central position of the lens LN and is emitted from the light modulating panel MP, the traveling direction of the light I12 after passing through the lens structure LS (or the lens LN) may deviate from the normal direction of the display device 100, that is, the light I12 may be an oblique light. In other words, by adjusting the switching of the pixels PX in the light modulating panel MP, the light type of the light entering the display panel DP may be controlled. The lens structure LS may be attached to the display panel DP through a frame glue FA2, as shown in FIG. 1, but not limited thereto.

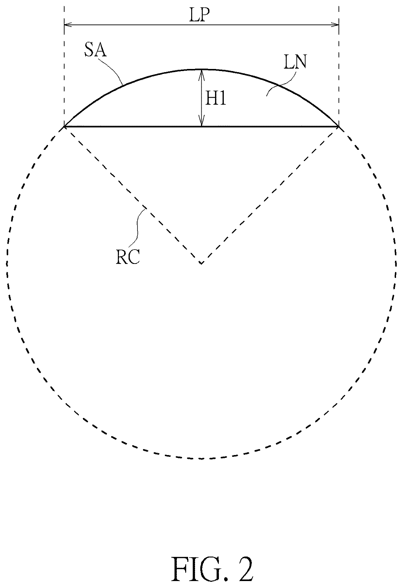

Referring to FIG. 2, FIG. 2 schematically illustrates a cross-sectional view of a lens of an electronic device according to the present disclosure. In the present embodiment, the lens LN may have a focal length LF. In detail, in a cross-sectional view of the lens LN, the radius of curvature RC of the protruding surface SA of the lens LN may first be determined, wherein the radius of curvature RC refers to the radius of a virtual circle including the protruding surface SA. After determining the radius of curvature RC, the focal length LF may be calculated using the following equation (1): $LF = RC / \left(INX-1\right)$

In equation (1), the parameter INX represents the refractive index of the lens LN, which depends on the material used for the lens LN. In the present embodiment, the refractive index of the lens LN may for example range from 1.4 to 1.8. For example, the material of the lens LN may include polymers (such as poly(methyl methacrylate) (PMMA) or polycarbonate (PC)), glass, or other suitable materials. In addition, in the present embodiment, the lens LN may have a thickness H1, wherein the thickness H1 may range from 0.5 micrometers (µm) to 250 µm (i.e., 0.5 µm≤H1≤250 µm). In addition, in the present embodiment, the light transmittance of the lens LN in the wavelength range of visible light may for example range from 40% to 99%.

In addition, in the present embodiment, a first geometric optical distance L1 may be included between the protruding surface SF of the lens structure LS (or the protruding surface SA of the lens LN) and the second medium layer MD2 of the light modulating panel MP, as shown in FIGS. 1 and 3. The first geometric optical distance L1 may be defined as the geometric optical distance, in the normal direction of the display device 100, between the protruding surface SF (or the protruding surface SA) and the upper surface of the second medium layer MD2 (i.e., the surface adjacent to the substrate SB4). Specifically, the layers between the protruding surface SF and the upper surface of the second medium layer MD2 may first be identified, and then the geometric optical thicknesses of these layers may be calculated, and the first geometric optical distance L1 may be the sum of the geometric optical thicknesses of these layers. According to the present embodiment, the geometric optical thickness of a layer may be defined as the thickness of the layer divided by the refractive index of the layer. That is, the first geometric optical distance L1 may be calculated using the following equation (2): $L 1 = \sum \left(\frac{thickness of each layer}{refractive index of each layer}\right)$

In equation (2), the "each layer" refers to the layers located between the protruding surface SF and the upper surface of the second medium layer MD2. For example, according to FIG. 1, the "each layer" in equation (2) may include the lens structure LS (including the lenses LN and the base BS1, as shown in FIG. 3), the polarizer PL4, and the substrate SB4. In FIG. 3, the "each layer" in equation (2) further includes the adhesive layer AD1 in addition to the above-mentioned layers. The thicknesses of the above-mentioned layers may be measured at the position of the optical center of the lens LN. Specifically, in a cross-sectional view of the display device 100, a virtual line passing through the optical center of the lens LN and parallel to the normal direction of the display device 100 may be identified, and the thicknesses of the layers may be measured along the virtual line.

In addition, in the present embodiment, the lens structure LS (or the lens LN) may have a field of view at focal point FOV. The "field of view at focal point FOV" (in equation (3)) described herein is defined as the maximum emission angle of a light of a point light source that make the light capable of being received by a lens LN when the point light source is placed at the focal point of the lens LN. In the present embodiment, the field of view at focal point FOV may be calculated using the following equation (3): $FOV = arctan \left(LP/LF\right)$

In equation (3), "LF" represents the above-mentioned focal length LF, and "LP" represents the lens pitch LP of the lens structure LS (as shown in FIGS. 1 to 3). The lens pitch LP refers to the distance between the same relative positions of two adjacent lenses LN in the lens structure LS. In some embodiments, the lens pitch LP may be defined as the distance between the left edges (or right edges) of two adjacent lenses LN. In some embodiments, the lens pitch LP may be defined as the distance between the centers of two adjacent lenses LN. For example, the lens pitch LP may be the distance between two adjacent relatively low points of the protruding surface SF.

According to the present embodiment, the above-mentioned first geometric optical distance L1, the focal length LF of the lens LN, and the field of view at focal point FOV satisfy the following equations (4) and (5): $0.5 \leq L 1 / LF \leq 0.8$ $45 ° \leq FOV \leq 70 °$

Through the position designs of the lens structure LS and the pixels PX of the light modulating panel MP and the design of parameters of the first geometric optical distance L1, the focal length LF and the field of view at focal point FOV mentioned above, the light type of light passing through the lens structure LS may be freely adjusted. Specifically, to make the display device 100 emit normal light, the light modulating panel MP may allow light to pass only through pixels PX corresponding to the optical center of the lenses LN (e.g., PX1); to make the display device 100 emit oblique light, the light modulating panel MP may allow light to pass only through pixels PX corresponding to non-central positions of the lenses LN (e.g., PX2). In some embodiments, normal light and oblique light may be emitted simultaneously according to the display requirements of the display device 100. In such cases, the display device 100 may emit light of different light types under different situations. For example, in some embodiments, the display device 100 may serve as a vehicle display, and the light type of the displayed light may be determined based on the needs of the driver or passengers, thereby improving the viewing experience while reducing driving risks.

In order to simplify the description, the same elements or layers in the following embodiments would be labeled with the same symbol, and the features thereof will not be redundantly described.

Referring to FIG. 3, FIG. 3 schematically illustrates a cross-sectional view of an electronic device according to a second embodiment of the present disclosure. To simplify the figure, FIG. 3 illustrates only the second medium layer MD2, the substrates SB3 and SB4, and the polarizers PL3 and PL4 of the light modulating panel MP, and the detailed structure of the light modulating panel MP may refer to FIG. 1. In addition, the display structure ST1 of the display panel DP in FIG. 3 may include the substrate SB1, the substrate SB2, and the elements and layers located between the substrate SB1 and the substrate SB2 shown in FIG. 1. Compared to the above-mentioned display device 100, the display device 200 of the present embodiment further includes an optical film OF and a viewing angle controlling structure VA disposed on the lens structure LS. The viewing angle controlling structure VA is disposed on the optical film OF. For example, the optical film OF may be attached to the viewing angle controlling structure VA through an adhesive layer AD2, but not limited thereto. In the present embodiment, the optical film OF and the viewing angle controlling structure VA may be disposed between the lens structure LS and the display panel DP. In this case, an air layer AL may be included between the optical film OF and the lens structure LS. In addition, the viewing angle controlling structure VA may be attached to the display panel DP through an adhesive layer AD3. In other embodiments, the optical film OF and the viewing angle controlling structure VA may be disposed on the display panel DP, that is, the optical film OF is located on the display panel DP, and the viewing angle controlling structure VA is located on the optical film OF. The optical film OF has a microstructure surface MS, or in other words, at least one surface of the optical film OF may include microstructures. In the present embodiment, the optical film OF may include a diffuser, with irregular microstructures formed on its surface. In other embodiments, the optical film OF may include a bright enhancement film or any other suitable element having a microstructure surface. The haze of the optical film OF may range from 40% to 70% (i.e., 40%≤haze≤70%).

According to the present embodiment, a second geometric optical distance L2 may be included between the microstructure surface MS of the optical film OF and the protruding surface SF of the lens structure LS. The second geometric optical distance L2 may be defined as the geometric optical distance between the protruding surface SF (or the protruding surface SA) and the microstructure surface MS in the normal direction of the display device 200. Specifically, the layers between the protruding surface SF and the microstructure surface MS may first be identified, and then the geometric optical thicknesses of these layers may be calculated, and the second geometric optical distance L2 may be the sum of the geometric optical thicknesses of these layers. The method for calculating the geometric optical thickness of each layer may refer to the description above. That is, the second geometric optical distance L2 may be calculated using the following equation (6): $L 2 = \sum \left(\frac{thickness of each layer}{refractive index of each layer}\right)$

In the present embodiment, only the air layer AL (with a refractive index of 1) is included between the protruding surface SF and the microstructure surface MS. Therefore, the second geometric optical distance L2 may be the thickness of the air layer AL measured at the position of the optical center of the lens LN. In other embodiments, when the microstructure surface MS is located on the side of the optical film OF opposite to the lens structure LS, the second geometric optical distance L2 further includes the geometric optical thickness of the optical film OF. According to the present embodiment, the second geometric optical distance L2 and the lens pitch LP of the lens structure LS mentioned above may satisfy the following equation (7): $15 \leq L 2 / \left(LP-200μm\right) \leq 40$

It should be noted that the value "200 µm" in equation (7) represents the minimum line width or detail size that the human eye can resolve at a viewing distance of 70 cm. Through the disposition of the optical film OF and the parameter design of the second geometric optical distance L2 and the lens pitch LP, the occurrence of visible stripes caused by the arrangement of the lenses LN when using the display device 200 may be reduced, thereby improving the viewing experience of the display device 200.

According to the present embodiment, the viewing angle controlling structure VA may include a polarizer PL5 and a viewing angle controlling unit ST2. The viewing angle controlling unit ST2 is disposed on the polarizer PL5, that is, the polarizer PL5 is disposed between the viewing angle controlling unit ST2 and the optical film OF. The structure of the viewing angle controlling unit ST2 may refer to the structure of the above-mentioned light modulating panel MP or display panel DP. Specifically, although not shown in the figure, the viewing angle controlling unit ST2 may include two substrates and a medium layer, an upper electrode, and a lower electrode disposed between the two substrates, but not limited thereto. Compared to the display panel DP, the viewing angle controlling unit ST2 may not include the light blocking layer or the color conversion layer. In addition, compared to the display panel DP and the light modulating panel MP, the upper and lower electrodes of the viewing angle controlling unit ST2 may be formed entirely (or comprehensively), that is, the viewing angle controlling unit ST2 is not pixelated. The medium layer of the viewing angle controlling unit ST2 may include any suitable liquid crystal material, such as electrically controlled birefringence (ECB) liquid crystal or twisted nematic (TN) liquid crystal, but not limited thereto. The polarization direction of the polarizer PL5 may be determined based on the material of the medium layer of the viewing angle controlling unit ST2.

It should be noted that in some embodiments, the display device 200 may include only one of the optical film OF and the viewing angle controlling structure VA.

In some embodiments, the display device 200 may further include an anti-reflection layer AR disposed on the display panel DP. The anti-reflection layer AR may include any suitable layer with anti-reflection functionality, such as glass, but not limited thereto. The anti-reflection layer AR may be attached to the display panel DP through an adhesive layer AD4, but not limited thereto.

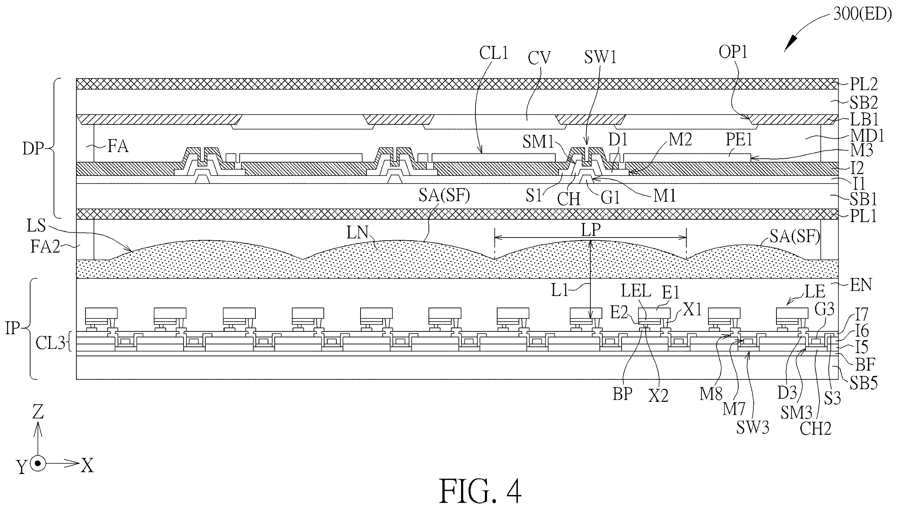

Referring to FIG. 4, FIG. 4 schematically illustrates a cross-sectional view of an electronic device according to a third embodiment of the present disclosure. Compared to the display device 100 shown in FIG. 1, the display device 300 of the present embodiment does not include the backlight module BL and the light modulating panel MP. Specifically, the display device 300 includes a light emitting panel IP, a lens structure LS disposed on the light emitting panel IP, and a display panel DP disposed on the lens structure LS. The structures of the lens structure LS and the display panel DP may refer to FIG. 1 and the descriptions above, and will not be repeated here. The light emitting panel IP may include any suitable self-emissive display panel. For example, the light emitting panel IP includes a substrate SBS, a circuit layer CL3 disposed on the substrate SB5, and a plurality of light emitting units LE disposed on the circuit layer CL3. The material of the substrate SBS may refer to the material of the substrate SB1 described above. The circuit layer CL3 includes a semiconductor layer SM3, conductive layers M7 and M8, an insulating layer I5 located between the semiconductor layer SM3 and the conductive layer M7, an insulating layer I6 located between the conductive layers M7 and M8, and an insulating layer I7 covering the conductive layer M8. The circuit layer CL3 includes a plurality of switching elements SW3 electrically connected to the light emitting units LE. Each switching element SW3 may include a channel layer CH2, a gate G3, a source S3, and a drain D3. The channel layer CH2 may be formed of the semiconductor layer SM3, the gate G3 may be formed of the conductive layer M7, and the source S3 and the drain D3 may be formed of the conductive layer M8. The light emitting panel IP may further include a buffer layer BF disposed between the circuit layer CL3 and the substrate SB5. The light emitting units LE may include light emitting diodes, such as mini light emitting diodes, micro light emitting diodes, or quantum dot light emitting diodes, but not limited thereto. For example, each light emitting unit LE may include a first semiconductor E1, a second semiconductor E2, and a light emitting layer LEL disposed between the first semiconductor E1 and the second semiconductor E2. The first semiconductor E1 is electrically connected to a conductive pad BP on the circuit layer CL3 through an electrode X1, thereby being electrically connected to the switching element SW3 through the conductive pad BP. Therefore, the light emitting unit LE may be driven to emit light through the switching element SW3. The second semiconductor E2 is electrically connected to a conductive pad BP on the circuit layer CL3 through an electrode X2. In some embodiments, the light emitting unit LE may include an organic light emitting diode (OLED). In the present embodiment, one light emitting unit LE (or the light emitting layer LEL of the light emitting unit LE) may define one pixel of the light emitting panel IP, but not limited thereto. The light emitting panel IP further includes an encapsulation layer EN disposed on and covering the light emitting units LE. It should be noted that the structure of the light emitting panel IP in the present embodiment is not limited to what is shown in FIG. 4. In some embodiments, the light emitting panel IP may further include a color conversion layer, a light blocking layer, an upper substrate, or other suitable layers.

According to the present embodiment, at least one lens LN of the lens structure LS may correspond to at least two light emitting units LE in the light emitting panel IP. For example, in FIG. 4, one lens LN may correspond to three light emitting units LE, but not limited thereto. In this case, different light emitting units LE may correspond to different positions of the lens LN (e.g., the optical center or non-central positions of the lens LN). In addition, in the present embodiment, the above-mentioned first geometric optical distance L1 is the geometric optical distance between the protruding surface SF of the lens structure LS and the light emitting unit LE. Specifically, the first geometric optical distance L1 may be the sum of the geometric optical thicknesses (as described above) of the layers located between the protruding surface SF and the light emitting layer LEL of the light emitting unit LE, such as the lens LN, the base BS1, the encapsulation layer EN, and the first semiconductor E1, but not limited thereto. In the present embodiment, the first geometric optical distance L1, and the focal length LF and the field of view at focal point FOV of the lens LN also satisfy the above-mentioned equations (4) to (5), wherein the field of view at focal point FOV is defined through the above-mentioned equation (3). In other words, compared to the display device 100 described above, the display device 300 of the present embodiment replaces the backlight module BL and the light modulating panel MP with the light emitting panel IP, and the display device 300 may generate light with different light types by controlling portions of the light emitting units LE in the light emitting panel IP to emit light. The details thereof may refer to the descriptions above. Therefore, the power consumption of the display device 300 may be reduced.

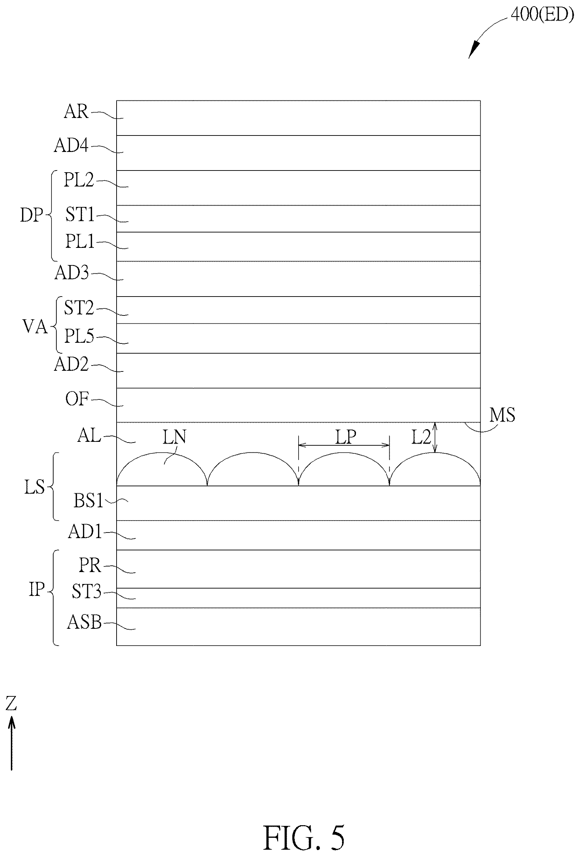

Referring to FIG. 5, FIG. 5 schematically illustrates a cross-sectional view of an electronic device according to a fourth embodiment of the present disclosure. Compared to the display device 200 shown in FIG. 3, the display device 400 of the present embodiment replaces the backlight module BL and the light modulating panel MP with the light emitting panel IP. In other words, compared to the display device 300 shown in FIG. 4, the display device 400 of the present embodiment further includes an optical film OF and a viewing angle controlling structure VA disposed on the lens structure LS, and the features thereof may refer to FIG. 3 and the descriptions above. The light emitting panel IP in FIG. 5 may include a circuit substrate ASB, a light emitting structure ST3, and a protective layer PR. The circuit substrate ASB may include the substrate SB5 and the circuit layer CL3 shown in FIG. 4. The light emitting structure ST3 may include the light emitting units LE shown in FIG. 4, other suitable layers (e.g., a color conversion layer, a light blocking layer, etc.), or a combination thereof. The protective layer PR may include the encapsulation layer EN shown in FIG. 4, other suitable layers (e.g., an insulating layer, a substrate, etc.), or a combination thereof. In this case, in the display device 400, the second geometric optical distance L2 between the microstructure surface MS of the optical film OF and the protruding surface SF of the lens structure LS, and the lens pitch LP of the lens structure LS also satisfy the above-mentioned equation (7). The characteristics of other layers in FIG. 5 may refer to the descriptions in FIG. 3 and will not be repeated here.

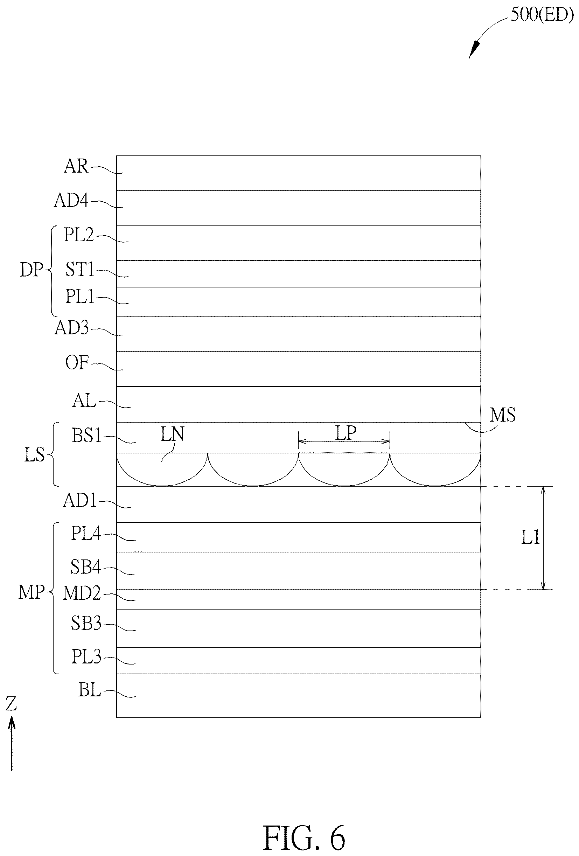

Referring to FIG. 6 to FIG. 8, which schematically illustrate cross-sectional views of electronic devices according to a fifth embodiment to a seventh embodiment of the present disclosure. One of the main differences between the display device 500 of the present embodiment and the display device 200 shown in FIG. 3 is the disposition way of the lens structure LS. Specifically, in the display device 500, the lens structure LS is disposed on the light modulating panel MP and the backlight module BL in the way that the protruding surface SF of the lens structure LS faces downward. That is, the protruding surface SF of the lens structure LS faces the light modulating panel MP. It should be noted that the above-mentioned disposition way of the lens structure LS may also be applied to the display devices shown in FIGS. 4 and 5. In such cases, the protruding surface SF of the lens structure LS faces the light emitting panel IP. It should also be noted that the display device 500 of the present embodiment may not include the above-mentioned viewing angle controlling structure VA and the adhesive layer AD2, but not limited thereto. Since the protruding surface SF faces downward, the value of the first geometric optical distance L1 may be reduced. For example, as shown in FIG. 6, the first geometric optical distance L1 in the present embodiment may be the sum of the geometric optical thicknesses of the adhesive layer AD1, the polarizer PL4, and the substrate SB4. That is, compared to the first geometric optical distance L1 in FIG. 3, the first geometric optical distance L1 of the present embodiment does not include the geometric optical thicknesses of the lens LN and the base BS1. Under the conditions of the equations (3) and (4) above, when the first geometric optical distance L1 decreases, the focal length LF may also decrease, and the lens pitch LP may be reduced accordingly. In other words, by disposing the lens structure LS with its protruding surface SF facing downward, the first geometric optical distance L1 may be reduced, thereby lowering the required value of the lens pitch LP. Therefore, the possibility of visible stripes being observed by the user may be reduced.

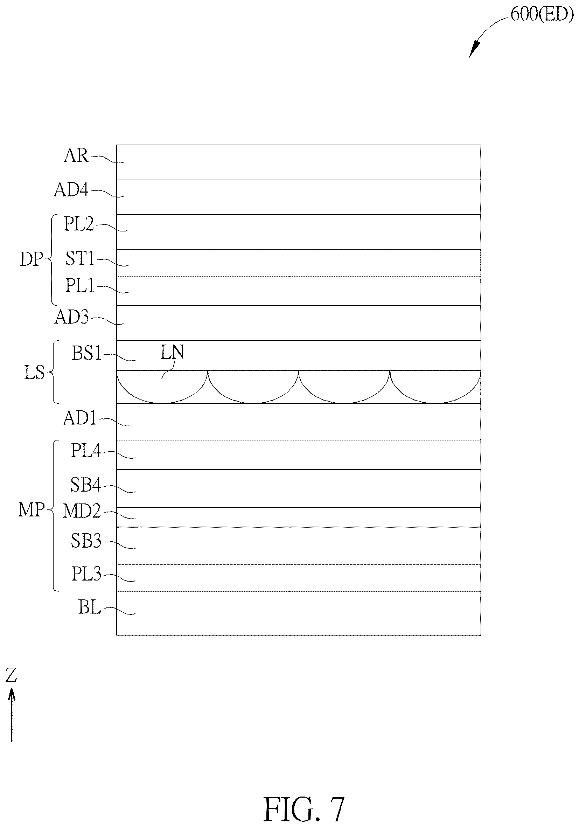

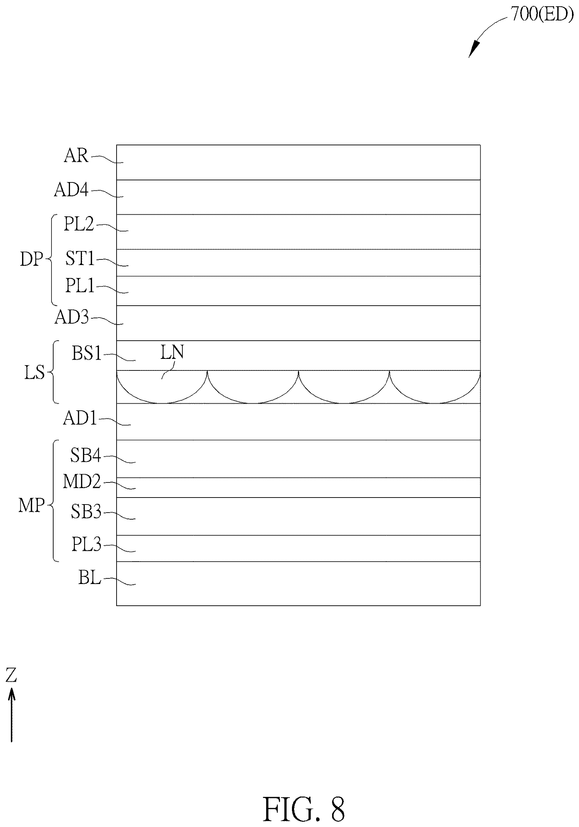

In some embodiments, as shown in the display device 600 of FIG. 7, after reducing the first geometric optical distance L1 as described above, the lens pitch LP of the lens structure LS may range from 30 µm to 280 µm (i.e., 30 µm≤LP≤280 µm). Specifically, when the lens pitch LP is less than 30 µm, the manufacturing process may become more difficult; when the lens pitch LP is greater than 280 µm, the optical performance of the lens LN may be degraded. It should be noted that when the lens pitch LP is less than 200 µm, the above-mentioned air layer AL may not be included. In this case, the display device 600 may not include the optical film OF and may not include the viewing angle controlling structure VA. In some embodiments, as shown in FIG. 8, compared to the display device 600, the display device 700 may not include the upper polarizer of the light modulating panel MP (i.e., the polarizer PL4). Therefore, the value of the first geometric optical distance L1 may further be reduced, thereby lowering the required value of the lens pitch LP. It should be noted that the above-mentioned features may be applied to the display devices shown in FIGS. 4 and 5.

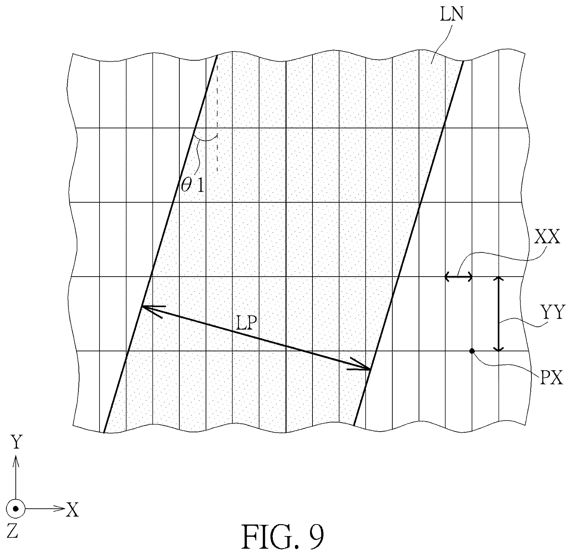

Referring to FIG. 9, FIG. 9 schematically illustrates a partial top view of an electronic device according to an eighth embodiment of the present disclosure. FIG. 9 illustrates a plurality of straight lines extending along the direction X and the direction Y, wherein at least one intersection point of these straight lines may be regarded as a pixel PX of the above-mentioned light modulating panel MP or a pixel of the above-mentioned light emitting panel IP. FIG. 9 also illustrates one lens LN in the lens structure LS. The pixels PX of the light modulating panel MP (or the pixels of the light emitting panel IP) may be arranged in a matrix along the direction X and the direction Y. In this case, the pixels PX of the light modulating panel MP (or the pixels of the light emitting panel IP) may have a pitch XX in the direction X and a pitch YY in the direction Y. According to the present embodiment, the extending direction of the lens LN in the lens structure LS may not be parallel to the arrangement direction of the pixels PX of the light modulating panel MP (or the pixels of the light emitting panel IP). For example, the extending direction of the lens LN may not be parallel to the direction Y, and an included angle θ1 may be included between the extending direction of the lens LN and the direction Y, wherein the included angle θ1 may be less than or equal to 15 degrees (θ1≤15°). In other words, the extending direction of the lens LN may not be parallel to the direction of the pitch YY. Through the above-mentioned design, the possibility of generation of moiré pattern may be reduced.

In addition, in the present embodiment, the lens pitch LP of the lens structure LS and the pitch XX may satisfy the following equation (8): $1 / 40 * LP \leq XX \leq 1 / 8 * LP$

It should be noted that in the present embodiment, the lens pitch LP may be defined in a top view of the lens structure LS. Specifically, as shown in FIG. 9, the lens pitch LP may be defined as the vertical distance between the two sides of the lens LN.

In addition, in the present embodiment, the pitch YY may be greater than the pitch XX. Specifically, the pitch YY and the pitch XX may satisfy the following equation (9): $2 * XX \leq YY \leq 20 * XX$

In the present embodiment, since the resolution requirement of the display device in the direction Y may be lower than that in the direction X, the above-mentioned parameter design may reduce the production cost of the display device or increase the aperture ratio of the display device. The features shown in FIG. 9 may be applied to the above-mentioned display devices.

In summary, an electronic device including a light modulating panel (or a light emitting panel) and a lens structure for controlling the light type of light entering a display panel is provided. Therefore, the light used for display in the electronic device may be switched according to different display requirements.

## Claims

1. An electronic device (ED), **characterized by** comprising:
a backlight module (BL) comprising a plurality of light emitting units (LU);
a light modulating panel (MP) disposed on the backlight module (BL) and having a plurality of pixels (PX), wherein the light modulating panel (MP) comprises:
a substrate (SB3); and
a light modulating panel medium layer (MD2) disposed on the substrate (SB3);
a lens structure (LS) disposed on the light modulating panel (MP) and comprising a plurality of lenses (LN), wherein at least one of the plurality of lenses (LN) corresponds to at least two of the plurality of pixels (PX); and
a display panel (DP) disposed on the lens structure (LS),
wherein one of the plurality of lenses (LN) has a protruding surface (SA), a first geometric optical distance L1 is included between the protruding surface (SA) and the light modulating panel medium layer (MD2), the one of the plurality of lenses (LN) has a focal length LF and a field of view at focal point FOV, and the first geometric optical distance L1,
the focal length LF and the field of view at focal point FOV satisfy: $0.5 \leq L 1 / LF \leq 0.8 ;$ $45 ° \leq FOV \leq 70 ° .$

2. The electronic device (ED) of claim 1, **characterized in that** the protruding surface (SA) of the one of the plurality of lenses (LN) faces the light modulating panel (MP).

3. The electronic device (ED) of claim 1 or claim 2, **characterized in that** the lens structure (LS) has a lens pitch (LP), and the lens pitch (LP) ranges from 30 micrometers to 280 micrometers.

4. The electronic device (ED) of claim 1 or claim 3, further **characterized by** comprising an optical film (OF) disposed on the lens structure (LS), wherein the optical film (OF) has a microstructure surface (MS), a second geometric optical distance L2 is included between the microstructure surface (MS) and the protruding surface (SA) of the one of the plurality of lenses (LN), the lens structure (LS) has a lens pitch LP, and the second geometric optical distance L2 and the lens pitch LP satisfy: $15 \leq L 2 / \left(LP-200μm\right) \leq 40 .$

5. The electronic device (ED) of any one of claim 1 to claim 4, further **characterized by** comprising a viewing angle controlling structure (VA) disposed on the lens structure (LS).

6. An electronic device (ED), **characterized by** comprising:
a light emitting panel (IP) comprising a plurality of light emitting units (LE);
a lens structure (LS) disposed on the light emitting panel (IP) and comprising a plurality of lenses (LN), wherein at least one of the plurality of lenses (LN) corresponds to at least two of the plurality of light emitting units (LE); and
a display panel (DP) disposed on the lens structure (LS),
wherein one of the plurality of lenses (LN) has a protruding surface (SA), a first geometric optical distance L1 is included between the protruding surface (SA) and the plurality of light emitting units (LE), the one of the plurality of lenses (LN) has a focal length LF and a field of view at focal point FOV, and the first geometric optical distance L1, the focal length LF and the field of view at focal point FOV satisfy: $0.5 \leq L 1 / LF \leq 0.8 ;$ $45 ° \leq FOV \leq 70 ° .$

7. The electronic device (ED) of claim 6, **characterized in that** the protruding surface (SA) of the one of the plurality of lenses (LN) faces the light emitting panel (IP).

8. The electronic device (ED) of claim 6 or claim 7, **characterized in that** the lens structure (LS) has a lens pitch (LP), and the lens pitch (LP) ranges from 30 micrometers to 280 micrometers.

9. The electronic device (ED) of claim 6 or claim 8, further **characterized by** comprising an optical film (OF) disposed on the lens structure (LS), wherein the optical film (OF) has a microstructure surface (MS), a second geometric optical distance L2 is included between the microstructure surface (MS) and the protruding surface (SA) of the one of the plurality of lenses (LN), the lens structure (LS) has a lens pitch LP, and the second geometric optical distance L2 and the lens pitch LP satisfy: $15 \leq L 2 / \left(LP-200μm\right) \leq 40 .$

10. The electronic device (ED) of any one of claim 6 to claim 9, further **characterized by** comprising a viewing angle controlling structure (VA) disposed on the lens structure (LS).
